# EUROPÄISCHE PATENTANMELDUNG

(11) **EP 2 982 704 A1**
(43) Veröffentlichungstag der Anmeldung: **10.02.2016**
(21) Anmeldenummer: 14180027.6
(22) Anmeldetag: 06.08.2014
(51) Int. Cl.: C08J 5/24, C08J 5/04

(54) **Reversibel vernetzte Polymeremulsionen**

(71) Anmelder: Evonik Degussa GmbH, 45128 Essen (DE)
(72) Erfinder: Schmidt, Friedrich Georg, 45721 Haltern am See (DE); Hilf, Stefan, 109700 Singapore (SG); Hermes, Florian, 60313 Frankfurt (DE); Staschik, Dorothea, 61130 Nidderau (DE); Eurich, Thomas, 63452 Hanau (DE); Pieroth, Rebecca, 63549 Ronneburg (DE)

(57) **Zusammenfassung**

Die Erfindung betrifft dabei insbesondere Emulsionspolymerisate, die mittels Hetero-Diels-Alder- (HDA-)Mechanismus intrapartikulär vernetzt werden. Die vernetzten Polymerisate können dann durch thermische Verarbeitung, beispielsweise als Composite-Matrix, durch eine retro-Diels-Alder- bzw. retro-Hetero-Diels-Alder-Reaktion ganz oder teilweise entnetzt und beim Abkühlen interpartikulär wieder vernetzt werden. Hierdurch sind lagerstabile Prepregs für Composite darstellbar. Aber auch andere Materialien, die duroplastische Eigenschaften bei Nutztemperatur haben, aber bei höherer Temperatur thermoplastische Verarbeitungseigenschaften besitzen, können so realisiert werden.

## Beschreibung

### Gebiet der Erfindung

Die vorliegende Erfindung betrifft die Herstellung von reversibel vernetzenden Polymer-Strukturen und insbesondere ein neuartiges System, das bei der Verwendung von hohen Molekulargewichten der eingesetzten Polymere oder bei hochreaktiven Systemen eine lagerstabile Darreichungsform darstellt. Die als Dispersion vorliegenden Polymere können z.B. für die Imprägnierung von Fasermaterial, wie z.B. Carbonfasern, Glasfasern oder Polymerfasern zur Herstellung von Prepregs nach bekannten Verfahren verwendet werden.

Die Erfindung betrifft dabei insbesondere Emulsionspolymerisate, die mittels Hetero-Diels-Alder- (HDA-)Mechanismus intrapartikulär vernetzt werden. Die vernetzten Polymerisate können dann durch thermische Verarbeitung, beispielsweise als Composite-Matrix, durch eine retro-Diels-Alder- bzw. retro-Hetero-Diels-Alder-Reaktion ganz oder teilweise entnetzt und beim Abkühlen interpartikulär wieder vernetzt werden. Hierdurch sind lagerstabile Prepregs für Composite darstellbar. Aber auch andere Materialien, die duroplastische Eigenschaften bei Nutztemperatur haben, aber bei höherer Temperatur thermoplastische Verarbeitungseigenschaften besitzen, können so realisiert werden.

### Stand der Technik

Faserverstärkte Materialien in Form von Prepregs werden bereits in vielen industriellen Anwendungen wegen ihrer bequemen Handhabung und der erhöhten Effizienz bei der Verarbeitung im Vergleich zu der alternativen wet-layup Technologie eingesetzt.
Industrielle Anwender solcher Systeme verlangen neben schnelleren Zykluszeiten und höheren Lagerstabilitäten - auch bei Raumtemperatur - zusätzlich eine Möglichkeit, die Prepregs zuzuschneiden, ohne dass bei automatisiertem Zuschnitt und Lay-up der einzelnen Prepreg-Lagen, die Schneidwerkzeuge mit der häufig klebrigen Matrixmaterial verunreinigt werden. Verschiedene Formgebungsprozesse, wie z. B. das Reaction-Transfer- Moulding-(RTM)-Verfahren beinhalten die Einbringung der Verstärkungsfasern in eine Form, das Schließen der Form, das Einbringen der vernetzbaren Harzformulierung in die Form und die anschließende Vernetzung des Harzes, typischerweise durch Wärmezufuhr.

Eine der Beschränkungen eines solchen Prozesses ist das relativ schwierige Einlegen der Verstärkungsfasern in die Form. Die einzelnen Lagen des Gewebes oder Geleges müssen zugeschnitten und den unterschiedlichen Geometrien der jeweiligen Formteile angepasst werden. Das kann sowohl zeitintensiv wie auch kompliziert sein, insbesondere wenn die Formkörper auch Schaum- oder andere Kerne enthalten sollen. Vorformbare Faserverstärkungen mit einfachem Handling und bestehenden Umformmöglichkeiten wären hier wünschenswert.

Neben Polyestern, Vinylestern und Epoxy-Systemen gibt es eine Reihe spezialisierter Harze im Bereich der vernetzenden Matrix-Systeme. Dazu zählen auch Polyurethan-Harze, die wegen ihrer Zähigkeit, Schadenstoleranz und die Festigkeit insbesondere zur Herstellung von Composite-Profilen über Pultrusionsverfahren eingesetzt werden. Als Nachteil wird häufig die Toxizität der verwendeten Isocyanate genannt. Jedoch auch die Toxizität von Epoxy-Systemen und der dort verwendeten Härter-Komponenten ist als kritisch anzusehen. Dies gilt insbesondere für bekannte Sensibilisierungen und Allergien.

Darüber hinaus haben die meisten Matrixmaterialien zur Herstellung von Prepregs für Composites den Nachteil, dass sie bei der Applikation auf das Fasermaterial entweder in fester Form, z.B. als Pulver, oder als hochviskose Flüssigkeit oder Schmelze vorliegen. In beiden Fällen erfolgt eine nur geringe Durchtränkung des Fasermaterials mit dem Matrixmaterial, was wiederum zu einer nicht optimalen Stabilität des Prepregs bzw. des Composite-Bauteils führen kann.

Prepregs und daraus hergestellte Composites auf der Basis von Epoxy-Systemen werden zum Beispiel beschrieben in WO 98/50211, EP 309 221, EP 297 674, WO 89/04335 und US 4,377,657. In WO 2006/043019 wird ein Verfahren zur Herstellung von Prepregs auf der Basis von Epoxidharz-Polyurethanpulvern beschrieben. Des Weiteren sind Prepregs auf der Basis von pulverförmigen Thermoplasten als Matrix bekannt.

In WO 99/64216 werden Prepregs und Composite und eine Methode zu deren Herstellung beschrieben, bei der Emulsionen mit so kleinen Polymerpartikeln verwendet werden, dass eine Einzelfaserumhüllung ermöglicht wird. Die Polymere der Partikel haben eine Viskosität von mindestens 5000 centipoise und sind entweder Thermoplaste oder vernetzende Polyurethan-Polymere.

In der EP 0590702 werden Pulverimprägnierungen zur Herstellung von Prepregs beschrieben, bei denen das Pulver aus einem Gemisch aus einem Thermoplasten und einem reaktiven Monomer bzw. Prepolymeren besteht. Die WO 2005/091715 beschreibt ebenfalls die Verwendung von Thermoplasten zur Herstellung von Prepregs.

Prepregs, die unter Verwendung von Diels-Alder-Reaktionen und potentiell aktivierbaren Retro-Diels-Alder Reaktionen hergestellt wurden, sind gleichfalls bekannt. Bei A.M. Peterson et al. (ACS Applied Materials & Interfaces (2009), 1(5), 992-5) werden entsprechende Gruppen in Epoxy-Systemen beschrieben. Durch diese Modifizierung erhält man selbstheilende Eigenschaften der Bauteile. Analoge Systeme, die nicht auf einer Epoxy-Matrix beruhen, finden sich u.a. auch bei J.S. Park et al. (Composite Science and Technology (2010), 70(15), 2154-9) oder bei A.M. Peterson et al. (ACS Applied Materials & Interfaces (2010), 2(4), 1141-9). Keines der aufgeführten Systeme ermöglicht jedoch eine über eine Selbstheilung hinausgehende nachträgliche Modifizierung der Composites. Die klassische Diels-Alder-Reaktion ist unter den möglichen Bedingungen nur unzureichend zurückzuführen, so dass hier nur geringe Effekte, wie sie für eine Selbstheilung beschädigter Bauteile ausreichend sein können, möglich sind.

In der EP 2 174 975 und in EP 2 346 935 sind jeweils Composite Materialien, verwendbar als Laminat, mit bis-Maleinimid- und Furan-Gruppen beschrieben, welche thermisch recycelt werden können. Dem Fachmann ist leicht ersichtlich, dass ein solches System nur bei relativ hohen Temperaturen wieder aktiviert, d.h. zu mindest zu einem großen Teil wieder entnetzt, werden kann. Bei solchen Temperaturen kommt es jedoch schnell zu weiteren Nebenreaktionen, so dass der Mechanismus - wie beschrieben - nur zum Recyceln, nicht jedoch zum Modifizieren der Composites geeignet ist.

In WO 2013/079286 werden Composite-Materialien bzw. Prepregs zu deren Herstellung beschrieben, die Gruppen für eine reversible Hetero-Diels-Alder-Reaktion aufweisen. Diese Systeme sind reversibel vernetzbar und die Formteile damit sogar recycelbar. Jedoch lassen sich diese Systeme nur als flüssiges 100%-System oder aus einer organischen Lösung applizieren. Damit ist die Anwendbarkeit dieser Technologie deutlich eingeschränkt.

Alle beschriebenen Systeme basieren entweder auf organischen Lösungsmitteln oder werden als Schmelze oder als flüssiges 100%-System appliziert. Keines der beschriebenen Systeme kann jedoch in form einer wässrigen Dispersion appliziert werden. Insbesondere solche wässrigen Systeme hätten jedoch große Vorteile in Hinblick auf die Arbeitssicherheit und zusätzlich verfügbare Verarbeitungstechnologien bei der Herstellung von Prepregs bzw. Composite-Materialien.

### Aufgabe

Die Aufgabe der vorliegenden Erfindung vor dem Hintergrund des Standes der Technik war es, eine neue Prepreg-Technologie zur Verfügung zu stellen, die ein einfacheres Verfahren zur Herstellung von problemlos zu handhabenden Prepreg-Systemen ermöglicht. Insbesondere war es dabei Aufgabe der vorliegenden Erfindung, Bindemittel zur Herstellung von Prepregs zu Verfügung zu stellen, die als wässrige Dispersion applizierbar sind.

Insbesondere war es Aufgabe der vorliegenden Erfindung, ein Verfahren zur Herstellung von Prepregs zur Verfügung zu stellen, welches eine gegenüber dem Stand der Technik deutlich vereinfachte Imprägnierung mit hochmolekularen und/oder hochreaktiven Systemen ermöglicht.

Gleichzeitig war es Aufgabe der vorliegenden Erfindung, Bindemittel zur Verfügung zu stellen, die als Pulver oder als Extrudat in Klebstoffen oder beim 3D-Druck verwendbar sind.

Darüber hinaus war es Aufgabe der vorliegenden Erfindung, ein Verfahren zur Herstellung von Prepregs zur Verfügung zu stellen, welches eine gegenüber dem Stand der Technik deutlich verlängerte Lagerstabilität und/oder Verarbeitungszeit (Standzeit, Potlife) ermöglicht. Zudem soll das Handling der Prepregs gegenüber dem Stand der Technik verbessert oder zumindest vergleichbar sein.

Darüber hinaus soll ein Verfahren zur Herstellung von Composite-Bauteilen zur Verfügung gestellt werden, durch das die Composites nach Fertigstellung weiter modifizierbar oder sogar recycelbar sein sollen. Entsprechend sollen auch Objekte, die mittels eines 3D-Druckverfahrens aus dem erfindungsgemäßen Material hergestellt wurden, recycelbar sein.

### Lösung

Der Begriff Composite Halbzeuge wird im Rahmen dieser Erfindung synonym zu den Begriffen Prepreg und Organoblech verwendet. Bei einem Prepreg handelt es sich in der Regel um eine Vorstufe für duroplastische Composite-Bauteile. Bei einem Organoblech handelt es sich normalerweise um eine entsprechende Vorstufe für thermoplastische Composite-Bauteile.

Gelöst wurden die Aufgaben durch das zur Verfügung Stellen neuartiger Kits zur Herstellung von Composite-Halbzeugen. Diese neuartigen Kits umfassen
A) einen faserförmigen Träger,
B) eine wässrige Polymerdispersion, enthaltend
B1) eine ersten Reaktivkomponente, aufweisend mindestens zwei dienophile Doppelbindungen, und
B2) eine zweite Reaktivkomponente, aufweisend mindestens zwei Dien-Funktionalitäten,
wobei die erste und die zweite Reaktivkomponente miteinander mittels einer Diels-Alder- oder eine Hetero-Diels-Alder-Reaktion vernetzbar sind und es sich bei mindestens einer der beiden Komponenten B1) oder B2) um ein Emulsionspolymerisat, bevorzugt um ein Poly(meth)acrylat, handelt.

Dabei enthält bevorzugt zumindest eine der Komponenten B1) oder B2) mehr als zwei der genannten Funktionalitäten. Mittels der genannten Funktionalitäten können die erste und die zweite Reaktivkomponente miteinander mittels einer Diels-Alder- oder einer Hetero-Diels-Alder-Reaktion vernetzt werden.

Bevorzugt handelt es sich bei dem reversiblen Vernetzungsmechanismus um eine Hetero-Diels-Alder-Reaktion. Besonders bevorzugt sind die dienophilen Doppelbindungen dabei Kohlenstoff-Schwefel-Doppelbindungen.

Besonders bevorzugt für die Variante einer Hetreo-Diels-Alder-Reaktion handelt es sich bei den dienophilen Doppelbindungen um Gruppen mit der Struktur 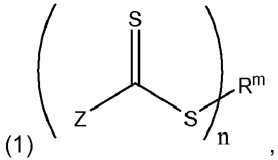 wobei es sich bei Z um eine 2-Pyridylgruppe, eine Cyanogruppe, eine Phosphorylgruppe oder eine Sulfonylgruppe, bei R^{m} um eine mehrbindige organische Gruppe oder um ein Polymer und bei n um eine Zahl zwischen 2 und 20 handelt.

Besonders bevorzugt für die zweite Variante einer Diels-Alder-Reaktion handelt es sich bei den dienophilen Doppelbindungen um Verbindungen mit Maleimidfunktionalitäten, z.B. um ein Bismaleimid, welches sich besonders gut mit Furanen als Komponente B2) kombinieren lassen.

Zur Herstellung der mit Dien- oder Dienophil-Gruppen funktionalisierten Makromonomeren gibt es verschiedene Möglichkeiten. In einer ersten, gleichzeitig bevorzugten Alternative werden copolymerisierbare Monomere, z.B. (Meth)acrylate, die eine zusätzliche Dien- oder Dienophil-Funktionalität aufweisen, mit anderen Monomeren, z.B. Alkyl(meth)acrylaten, copolymerisiert.
In einer zweiten Alternative erfolgt die Funktionalisierung an dem fertigen Emulsionspolymerisat mittels einer polymeranalogen Reaktion. Dabei kann es sich z.B. um einer Veresterungsreaktion mit einem entsprechend funktionalisierten Alkohol handeln. Alternativ kann es sich auch um die polymeranaloge Abspaltung einer Schutzgruppe handeln. Bevorzugt erfolgt die Polymerisation zur Herstellung des Emulsionspolymerisats unter Copolymerisation von Monomeren, die mindestens eine polymerisationsaktive Gruppe, besonders bevorzugt eine (Meth)acrylatgruppe, und mindestens eine Dien- oder Dienophil-Funktionalität, besonders bevorzugt eine Dien-Funktionalität, aufweisen.
In einer dritten Variante der vorliegenden Erfindung können auch beide Funktionalitäten B1) und B2) bereits bei der Emulsionspolymerisation, insbesondere beide als funktionelle Gruppen an dem gleichen Emulsionspolymerisat, vorliegen oder bereits intrapartikulär vernetzt sein, um so einen reversiblen Vernetzter in der Polymerisation darzustellen.

In einem zweiten Schritt, der weiter unten zum Verfahren näher beschrieben wird, wird dann die jeweils andere Komponente als Vernetzer in die das Emulsionspolymerisat enthaltende Dispersion oder einen isolierten Feststoff des Emulsionspolymerisats eingequollen. Das bedeutet, das eine Komponente B1) eingequollen wird, wenn es sich bei B2) um das Emulsionspolymerisat handelt, bzw. B2) eingequollen, wenn es sich bei B1) um das Emulsionspolymerisat handelt. Bevorzugt handelt es sich bei der Komponenten B2), also bei der Komponente, die mindestens zwei Dien-Gruppen aufweist, um das mittels Emulsionspolymerisation hergestellte Polymer.
Darauf, oder nach einer Temperaturerhöhung, werden die Emulsionspolymerisate intrapartikulär vernetzt. Da die Vernetzung intrapartikulär ist, liegt das Produkt weiterhin als stabile Dispersion vor, wenn die Quellung in der wässrigen Dispersion durchgeführt wurde. Dieses Verfahren eignet sich insbesondere dann, wenn eine der Funktionalitäten der Komponenten B1) oder B2) oder das Produkt aus B1) und B2) an sich instabil ist, d.h. entweder bei der Herstellung des Emulsionspolymerisats polymerisationsaktiv wäre oder unter den Bedingungen bei der Polymerisation Nebenreaktionen eingeht.

Die Formulierung B), aufweisend die Funktionalitäten B1) und B2) vernetzt bereits bei Raumtemperatur, d.h. direkt nach der Zugabe der jeweils zweiten Komponente B1) oder B2). Dabei kann die Vernetzungsreaktion bei bestimmten Paarungen aus spezifischen B1)- und B2)-Funktionalitäten durch eine erhöhte Temperatur beschleunigt werden. Diese Temperatur liegt unterhalb der Retro-Diels-Alder-Temperatur, bei der sich die Rück-Reaktion der Diels-Alder-Addukte wieder zu den Dienfunktionalitäten und Dienophilfunktionalitäten vollzieht. Auf diese Weise können unterhalb der Retro-Diels-Alder-Temperatur formstabile Duroplaste bzw. reversible vernetzte Composite-Bauteile erzeugt werden.

Bei den Emulsionspolymerisaten kann es sich im Prinzip um jedes Polymer handeln, dass mittels Emulsionspolymerisation hergestellt und dabei oder polymeranalog funktionalisiert werden kann. Solche Polymere sind beispielsweise Polyacrylate, Polymethacrylate, Polystyrole oder Mischpolymerisate aus Acrylaten, Methacrylaten und/oder Styrolen. Bevorzugt sind Polymethacrylate oder Mischpolymerisate aus Acrylaten und Methacrylaten, die optional auch einen Anteil an Styrol aufweisen können. Als Comonomere für solche Poly(meth)acrylate sind insbesondere Methyl(meth)acrylat, Ethyl(meth)acrylat, Propyl(meth)acrylat, iso-Porpyl(meth)acrylat, n-Butyl(meth)acrylat, tert-Butyl(meth)acrylate, Ethylhexyl(meth)acrylat oder Octyl(meth)acrylat geeignet. Auch ist es möglich, z-B- um bessere Haftungseigenschaften zu realisieren, weitere funktionelle Gruppen, wie zum Beispiel Amin-, Alkohol-, Säure-, Anhydrid- oder Silylgruppen in das Polymer einzubauen.

Die erfindungsgemäß verwendbaren reaktiven Zusammensetzungen sind umweltfreundlich, kostengünstig, weisen gute mechanische Eigenschaften auf, lassen sich einfach verarbeiten und zeichnen sich nach Härtung durch eine gute Wetterbeständigkeit sowie durch ein ausgewogenes Verhältnis zwischen Härte und Flexibilität aus.

Zusätzlich zu den Komponenten A und B können die Composite-Halbzeuge noch weitere Zusatzstoffe aufweisen. So können beispielsweise Lichtschutzmittel wie z.B. sterisch gehinderte Amine, oder andere Hilfsmittel, wie sie z. B. in EP 669 353 beschrieben wurden, in einer Gesamtmenge von 0,05 bis 5 Gew% zugesetzt werden. Füllstoffe und Pigmente wie z.B. Titandioxid können in einer Menge bis zu 30 Gew% der Gesamtzusammensetzung zugesetzt werden.

Für die Herstellung der erfindungsgemäßen reaktiven Polyurethanzusammensetzungen können darüber hinaus Zusatzstoffe wie Verlaufsmittel, z.B. Polysilicone oder Haftvermittler, z.B. auf Acrylatbasis zugesetzt werden.
Der Zusatz solcher zusätzlicher Komponenten kann je nach Stoff schon in der Emulsionspolyerisation, durch nachträgliches Dispergieren oder Quellen oder durch Formulierung des getrockneten Emulsionspolymerisats mit den Zusatzstoffen erfolgen.

Bevorzugt werden die Emulsionspolymerisate und die Zuschlagsstoffe derart gewählt, dass Die Dispersion bei der jeweiligen Applikationstemperatur filmbildend ist oder zumindest eine minimale Filmstabilität ergibt, die für die weitere Verwendung ausreichend ist. Dabei sintert die Emulsionspolymerisate an. Dieses Ansintern erfolgt dergestalt, dass sich intrapartikuläre Vernetzungsstellen lösen und interpartikulär wieder ausgebildet werden.

Besonders überraschend ist hierbei insbesondere der Effekt, dass Materialien, die nach der Formulierung mit Komponenten B1) und B2) eindeutig vernetzt, wenn auch je nach Zusammensetzung und Vernetzeranteil weich sind, in der Heißpresse zur Weiterverarbeitung auch mehrfach umgeformt, d.h. plastisch verformt werden können. Erhitzt man ein Plättchen dieses Materials kann man es verformen. Kühlt man es ab, entwickelt es in kurzer Zeit deutliche Rückstellkräfte zu dieser neuen Form.

### Trägermaterialien

Die erfindungsgemäß eingesetzten faserförmigen Träger A) bestehen bevorzugt größtenteils aus Glas, Kohlenstoff, Kunststoffen, wie Polyamid (Aramid) oder Polyester, Naturfasern, oder mineralischen Fasermaterialien wie Basaltfasern oder keramische Fasern. Die Fasern liegen dabei bevorzugt als textile Flächengebilde aus Vlies, Maschenware, Gewirke, Gestricke, nicht maschige Gebinde wie Gewebe, Gelege, Geflechte, als unidirektionale Fasern oder als unidirektionale Fasern, als Langfaser- oder Kurzfasermaterialien vor.

Im Detail liegt folgende Ausführung vor: Der faserförmige Träger in der vorliegenden Erfindung besteht aus faserförmigem Material (auch häufig Verstärkungsfasern genannt). Im Allgemeinen ist jegliches Material, aus dem die Fasern bestehen, geeignet, bevorzugt wird jedoch faserförmiges Material aus Glas, Kohlenstoff, Kunststoffen, wie z. B. Polyamid (Aramid) oder Polyester, Naturfasern oder mineralischen Fasermaterialien wie Basaltfasern oder keramische Fasern (Oxidische Fasern auf Basis von Aluminiumoxiden und/oder Siliciumoxiden) verwendet. Auch Mischungen von Fasertypen, wie z.B. Gewebe-Kombinationen aus Aramid- und Glasfasern, oder Kohlenstoff und Glasfasern, können verwendet werden. Ebenso sind Hybrid-Composite-Bauteile mit Prepregs aus unterschiedlichen faserförmigen Trägern herstellbar.

Glasfasern sind hauptsächlich wegen ihres relativ geringen Preises die am häufigsten verwendeten Fasertypen. Prinzipiell sind hier alle Arten von glasbasierenden Verstärkungsfasern geeignet (E-Glas-, S-Glas-, R-Glas-, M-Glas-, C-Glas-, ECR-Glas-, D-Glas-, AR-Glas-, oder Hohlglasfasern).
Kohlenstofffasern kommen im Allgemeinen in Hochleistungsverbundwerkstoffen zum Einsatz, wo auch die im Verhältnis zur Glasfaser niedrigere Dichte bei gleichzeitig hoher Festigkeit ein wichtiger Faktor ist. Kohlenstofffasern (auch Carbonfasern) sind industriell hergestellte Fasern aus kohlenstoffhaltigen Ausgangsmaterialien, die durch Pyrolyse in graphitartig angeordneten Kohlenstoff umgewandelt werden. Man unterscheidet isotrope und anisotrope Typen: isotrope Fasern besitzen nur geringe Festigkeiten und geringere technische Bedeutung, anisotrope Fasern zeigen hohe Festigkeiten und Steifigkeiten bei gleichzeitig geringer Bruchdehnung. Als Naturfasern werden hier alle Textilfasern und Faserwerkstoffe bezeichnet, die aus pflanzlichem und tierischem Material gewonnen werden (z.B. Holz-, Zellulose-, Baumwoll-, Hanf-, Jute-, Leinen-, Sisal-, Bambusfasern). AramidFasern weisen, ähnlich wie auch
Kohlenstofffasern, einen negativen Wärmeausdehnungskoeffizienten auf, werden also bei Erwärmung kürzer. Ihre spezifische Festigkeit und ihr Elastizitätsmodul sind deutlich niedriger als jene von Kohlenstofffasern. In Verbindung mit dem positiven Ausdehnungskoeffizienten des Matrixharzes lassen sich hoch maßhaltige Bauteile fertigen. Gegenüber Kohlenstofffaser verstärkten Kunststoffen ist die Druckfestigkeit von Aramidfaser-Verbundwerkstoffen deutlich geringer. Bekannte Markennamen für Aramidfasern sind Nomex® und Kevlar® von DuPont, oder Teijinconex®, Twaron® und Technora® von Teijin. Besonders geeignet und bevorzugt sind Träger aus Glasfasern, Kohlenstofffasern, Aramidfasern oder keramischen Fasern. Bei dem faserförmigen Material handelt es sich um ein textiles Flächengebilde. Geeignet sind textile Flächengebilde aus Vlies, ebenso sogenannte Maschenware, wie Gewirke und Gestricke, aber auch nicht maschige Gebinde wie Gewebe, Gelege oder Geflechte. Außerdem unterscheidet man Langfaser- und Kurzfasermaterialien als Träger. Ebenfalls erfindungsgemäß geeignet sind Rovings und Garne. Alle genannten Materialien sind im Rahmen der Erfindung als faserförmiger Träger geeignet. Einen Überblick über Verstärkungsfasern enthält "Composites Technologien", Paolo Ermanni (Version 4), Script zur Vorlesung ETH Zürich, August 2007, Kapitel 7.

### Komponente B1)

Bei Komponente B1) handelt es sich um eine Verbindung, optional um ein Polymer, mit mindestens zwei dienophilen Gruppen. Dabei kann es sich in einer ersten Variante - der Vernetzung mittels einer Hetero-Diels-Alder-Reaktion - um Funktionalitäten mit einer Kohlenstoff-Schwefel-Doppelbindung handeln. Allgemein weist die Verbindung B2) dieser ersten Variante folgende Form auf:

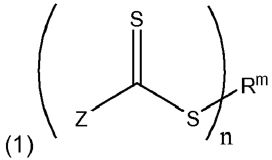

Bei Z handelt es sich um eine Elektronen-ziehende Gruppe, bei R^{m} um eine mehrbindige organische Gruppe oder um ein Polymer und bei n um eine Zahl zwischen 2 und 20, im Falle eines Emulsionspolymerisats zwischen 2 und 500. Bei Auswahl der Gruppe und des dazugehörigen Diens ist nur wichtig, dass die Hetero-Diels-Alder-Reaktion bei einer Temperatur, im Falle der vorliegenden Erfindung der der Vernetzungstemperatur T₁, unterhalb von 80°C aktivierbar, bei einer höheren Temperatur, bei der es sich um die Netnetzungstemperatur T₂ handelt, mittels einer retro-Hetero-Diels-Alder-Reaktion wieder rückführbar ist, und dass diese höhere Temperaturmöglichst unterhalb der Zersetzungstemperatur der im Pulvermaterial enthaltenen Komponenten liegt.

Besonders bevorzugt handelt es sich bei dem Dienophil in diesem Fall um einen Dithioester oder um ein Trithiocarbonat.

In einer bevorzugten Ausführungsform ist die Gruppe Z eine 2-Pyridylgruppe, eine Phosphorylgruppe oder eine Sulfphonylgruppe. Desweiteren kommen in Frage Cyano- oder Trifluoromethylgruppen sowie jede andere Gruppe Z, welche die Elektronendichte der C=S Doppelbindung sehr stark verringert und somit eine rasche Diels-Alder Reaktion erlaubt. Eine genaue Beschreibung der Dienophilgruppen für diese Ausführungsform einer (retro-)Hetero-Diels-Alder-Reaktion findet sich in der deutschen Patentanmeldung 102010002987.9 (bzw. der internationalen Patentanmeldung PCT/EP2011/050043). In dieser Schrift wird anhand von Ausführungsbeispielen auch die Durchführbarkeit der Reaktion gezeigt.

In der zweiten Variante der vorliegenden Erfindung, bei der die Vernetzung mittels einer Diels-Alder-Reaktion erfolgt, sind entsprechende für die Diels-Alder-Reaktion geeignete Dienophile mit einer Kohlenstoff-Kohlenstoff-Doppelbindung geeignet. Besonders geeignet dazu sind Maleimide der allgemeinen Form (6): 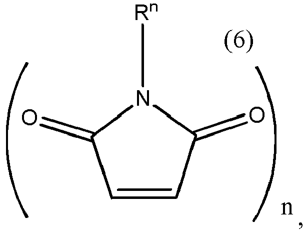 wobei es sich bei Rⁿ um eine mehrbindige organische Gruppe oder um ein Polymer und bei n um eine Zahl zwischen 2 und 20, im Falle eines Emulsionspolymerisats zwischen 2 und 500 handelt.

Besonders bevorzugt handelt es sich bei den Komponenten B1) nicht um das Emulsionspolymerisat, sondern um eine niedermolekulare Verbindung. In diesem Fall ist n = 2, 3 oder 4. Eine besonders geeignete Verbindung für die zweite Variante der vorliegenden Erfindung ist dabei ein Bismaleimid, insbesondere Bismaleimid-S (7):

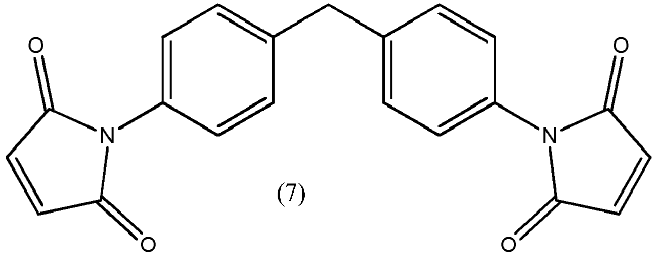

Beispiele für geeignete niedermolekulare Verbindungen der ersten Variante der vorliegenden Erfindung sind die Verbindungen (8) und (9):

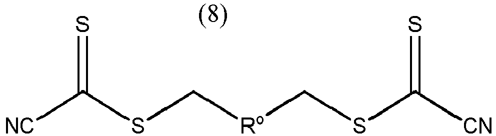

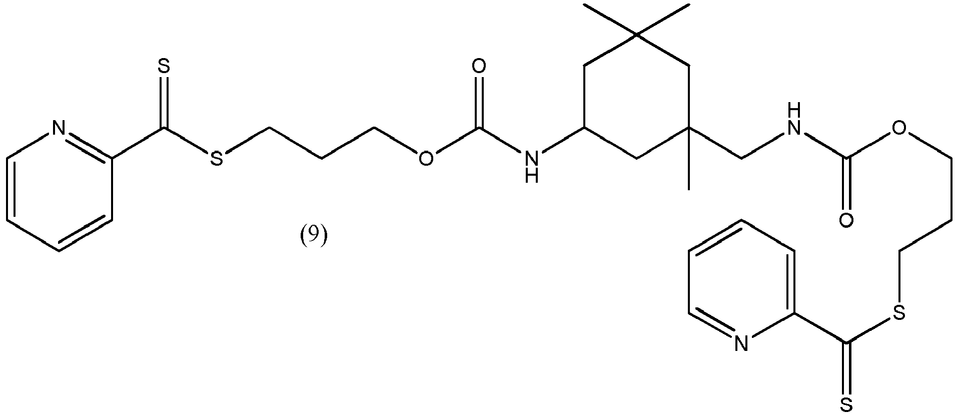

Andere geeignete Vernetzer als Komponente B2) finden sich beispielsweise in EP 2 536 797.

### Komponente B2)

Komponente B handelt es sich um eine Verbindung, die mindestens zwei Dien-Funktionalitäten aufweist. Diese Verbindung hat die allgemeine Formel:

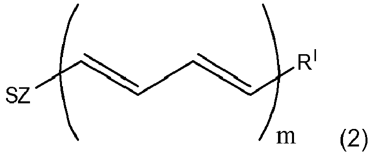

Dabei ist SZ eine eher Elektronen-schiebende Gruppe, wobei es sich auch einfach um Wasserstoff oder einen einfachen Alkylrest handeln kann. R^{I} ist eine mehrbindige organische Gruppe oder ein Polymer, bevorzugt das Emulsionspolymerisat und n ist eine Zahl zwischen 2 und 2000, bevorzugt zwischen 3 und 500. Die Kohlenstoffatome der Doppelbindungen können darüber hinaus weitere Reste aufweisen.
Bekannte Gruppen, die besonders gut als Dien geeignet sind, sind z.B. Furfuryl-Reste, Adukte des Sorbinalkohols oder Cyclopentadienyl-Reste.

Im bevorzugten Fall, dass es sich bei der Komponente B2) um das funktionalisierte Emulsionspolymerisat handelt, ist es - wie bereits ausgeführt - besonders vorteilhaft, wenn die Dien-Funktionalitäten durch die Copolymerisation entsprechender Monomere in dem Emulsionspolymerisat realisiert werden. Besonders bevorzugt Monomere dafür sind beispielsweise die folgenden, wobei die entsprechenden Acrylate genauso bevorzugt sind, wie die dargestellten Methacrylate: 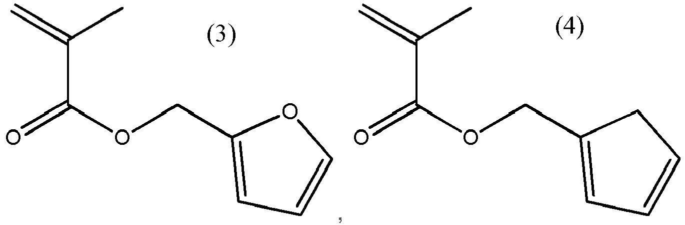 oder

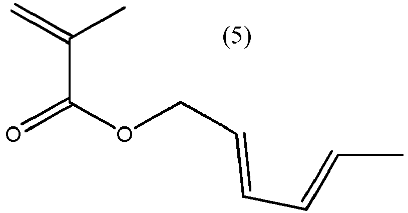

In einer besonderen Ausführungsform der vorliegenden Erfindung, können auch Bausteine verwendet werden, die der Diels-Alder-Reaktion bereits unterzogen wurden, und in eine Polymerkette über zwei polymerisationsaktive Funktionalitäten einpolymerisiert werden können. Diese Bausteine bilden bei der Polymerisation zusammen mit einem Monomer, wie beispielsweise MMA, ein Netzwerk, welches dann als Kit verwendet, reversibel entnetzt werden kann. Beispiele für solche Verbindungen mit jeweils zwei dieser Diels-Alder-Verknüpfungen und zwei polymerisationsaktiven Gruppen sind die Verbindungen (6) und (7):

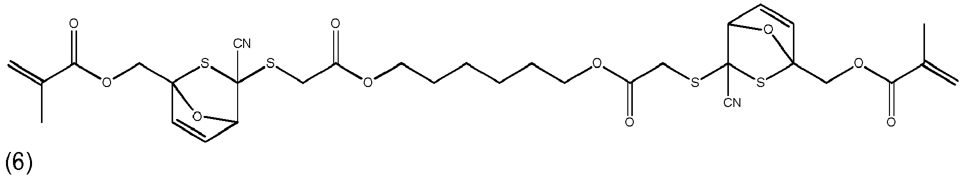

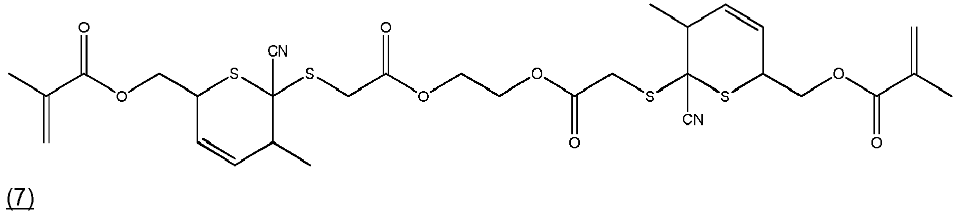

### Verfahren

Weiterhin ist ein neuartiges Verfahren zur Herstellung von Composite-Halbzeugen genauso wie deren Weiterverarbeitung zu Formteilen Teil der vorliegenden Erfindung. Dieses Verfahren ist durch folgende Verfahrensschritte gekennzeichnet:
I. optionale Formgebung eines faserförmigen Materials,
II. Herstellung einer wässrigen Poly(meth)acrylatdispersion mittels Emulsionspolymerisation, wobei die Monomerzusammensetzung Monomere enthält, die eine mit (Meth)acrylaten copolymerisierbare Gruppe und eine Dien-Funktionalität aufweisen,
III. Mischen der Dispersion aus Verfahrensschritt II. mit einer Verbindung, die mindestens zwei dienophile Doppelbindungen aufweist,
IV. direkte Imprägnierung des faserförmigen Trägers aus I. mit der Zusammensetzung aus III. und Formgebung,
V. Aushärten der Zusammensetzung bei einer Vernetzungstemperatur T₁.

Die so hergestellten Composite-Halbzeuge aus Verfahrensschritt V. kann darüber hinaus folgenden Verfahrensschritten unterzogen werden:
VI. Erhitzen auf eine Entnetzungstemperatur T₂,
VII. erneute Formgebung und
VIII. erneutes Aushärten der Zusammensetzung bei der Vernetzungstemperatur T₁.

Die Vernetzungstemperatur T₁ der Vernetzung in den Verfahrensschritten V und VIII liegt bevorzugt zwischen 0 und 60 °C, besonders bevorzugt zwischen 10 und 40 °C und ganz besonders bevorzugt bei Raumtemperatur.

Bei der Entnetzungstemperatur T₂ in Verfahrensschritt VI, bei der diese Vernetzungsstellen zu mindestens 50%, bevorzugt zu mindestens 70% mittels einer Retro-Diels-Alder- oder einer Retro-Hetero-Diels-Alder-Reaktion wieder gelöst werden, handelt es sich bevorzugt um eine Temperatur, die zwischen 50 und 150 °C, besonders bevorzugt zwischen 70 und 120 °C oberhalb der Vernetzungstemperatur T₁ liegt.

Verfahrensschritt III wird besonders bevorzugt bei einer Temperatur T₃ durchgeführt, die mindestens 40 °C oberhalb der Vernetzungstemperatur T₁ liegt. Verfahrensschritt V erfolgt durch Abkühlen auf die Vernetzungstemperatur T₁.

Verfahrensschritt IV, die Imprägnierung, erfolgt durch Tränkung der Fasern, Gewebe oder Gelege mit der in Verfahrensschritt III hergestellten Formulierung, insbesondere in Form einer Dispersion. Bevorzugt erfolgt die Imprägnierung bei der gleichen Temperatur wie Verfahrensschritt III. Dieses Aufbringung und Tränken der Gewebe/Gelege erfolgt insbesondere im dünnflüssigen Zustand der wässrigen Dispersion aus Verfahrensschritt III. Da die dort enthaltenen Partikel nur intrapartikulär vernetzt sind, ist dies möglich. Der besondere und große Vorteil ist hier die im Vergleich zu Thermoplasten extrem erniedrigte Viskosität der nicht verknüpften nebeneinander vorliegenden Emulsionspartikel sein.

Nach dem Imprägnieren, muss das Wasser der Dispersion entfernt werden. Dies kann ganz einfach durch Abdampfen bei der Temperatur T₁ oder kurzzeitig bei einer höheren Temperatur, die maximal bei der Temperatur T₂ liegen sollte, erfolgen. Dabei tritt auch gleichzeitig das Aushärten des Emulsionspolymers gemäß Verfahrensschritt V. ein. In der Regel erfolgt dies dadurch, dass die intrapartikulären Vernetzungsstellen teilweise gelöst werden und interpartikulär neu ausgebildet werden. Zusätzlich sind in außerdem in der Regel noch freie Gruppen der Komponenten B1) und B2) vorhanden, die beim Trocknen interpartikulär miteinander reagieren können. Als besonders vorteilhaft hat es sich erwiesen, die Formulierung bei einer Temperatur T₂ kurzzeitig zu trocknen und, wenn das Wasser entfernt ist, zur Aushärtung in Verfahrensschritt V. auf die Temperatur T₁ abzukühlen. Ein solcher Trocknungszwischenschritt wird im Weiteren als Verfahrensschritt IVa. bezeichnet.

Durch Verwendung der erfindungsgemäßen Zusammensetzung aus den Komponenten B1) und B2) erfolgt eine sehr gute Imprägnierung des Faser förmigen Trägers A), dadurch bedingt, dass die flüssige Zusammensetzung aus Komponenten B) den Träger A) sehr gut benetzt, wobei bei einer ausreichend hohen Temperatur während des Benetzens eine vorzeitige Aushärtung vermieden wird. Des Weiteren fallen die Prozessschritte der Vermahlung und Siebung, wie bei Composite Materialien des Standes der Technik häufig nötig, in einzelne Partikelgrößenfraktionen weg, sodass eine höhere Ausbeute an imprägniertem Faser förmigen Träger erzielt werden kann.

Die Composite Halbzeuge können nach Verfahrensschritt V z.B. in einer Presse durch Druck, bevorzugt bei einer Temperatur die der Entnetzungstemperatur T₂ entspricht, bevorzugt jedoch höchstens 20 °C als diese ist, in Form gebracht werden. Besonders geeignet ist dabei die Verwendung einer Bandpresse für die Herstellung von planaren "Organo-Blechen". Die Vernetzung des Verfahrensschrittes V erfolgt dabei bevorzugt innerhalb des zum Pressen verwendeten Werkzeugs durch Abkühlen auf die Verfahrenstemperatur T₁. Die Entformung erfolgt bevorzugt später aus dem auf diese Temperatur T₁ abgekühlten Werkzeug. Optional kann das Composite Halbzeug vor dem Verpressen, z.B. unter Druck oder auch durch Anlegen von Vakuum, vorgeformt werden. Dazu kann die Temperatur des Werkstücks auf die Temperatur T₂ erhöht werden.

Die beschichteten Materialien aus Verfahrensschritt IV können unter Druck auf die Temperatur T₂ gebracht, bei der die reversible Vernetzung genügend weit wieder aufgebrochen ist, um das Material zu einer homogenen Schicht zu verpressen. Dies kann in Abhängigkeit des Drucks und der Vernetzungsdichte sowie der Molmasse und der Glastemperatur des Materials auch ein wenig unterhalb des Gelpunktes des Polymers sein, d.h. die Materialien zeigen immer noch Eigenschaften eines vernetzen Materials, so z.B. Gel-Eigenschaften, Elastizität, Unlöslichkeit in Lösemitteln, Aufquellen in Lösemitteln und so weiter. Überraschend kann unter Druck trotzdem auch hier eine Formgebung unterhalb der Temperatur T₂ erfolgen.

Die Herstellung eines wieder flexibilisierbaren bzw. umformbaren Composite Halbzeugs wird in Verfahrensschritt V durch Abkühlung auf die Vernetzungstemperatur T₁, bevorzugt auf Raumtemperatur, bei der die Matrix in den kovalent vernetzten Zustand übergeht, abgeschlossen. Beim Abkühlen vernetzt die Matrix nicht nur innerhalb des Composite Halbzeugs, sondern optional auch zwischen mehreren vorher zusammengelegten Prepreg-Lagen über die Schichtgrenzen hinweg. Somit erfolgt die Vernetzung innerhalb des gesamten Composite-Bauteils, auch dann wenn dieses aus mehreren imprägnierten Teilen zusammengelegt wurde.

Nach der Herstellung eines wieder flexibilisierbaren / umformbaren Composite Halbzeuges in den Verfahrensschritten I bis V erfolgt optional eine Reaktivierung der Composite Halbzeuge, zur erneuten Formgebung in den Verfahrensschritten VI bis VIII. Ein besonderer Vorteil der vorliegenden Erfindung ist, dass die Verfahrensschritte VI bis VIII einmal oder mehrfach wiederholt werden können.

Die Formgebung in Verfahrensschritt VII oder auch schon während Verfahrensschritt V. kann mittels verschiedener Formgebungsverfahren erfolgen. Bei der Pultrusion, insbesondere der Thermoplast-Pultrusion, wird das imprägnierte Halbzeug durch eine Anordnung verschiedener Düsen gezogen. Dabei wird der Querschnitt allmählich zu der Geometrie des gewünschten Profils verjüngt.

Bei der Duromer- bzw. Naßwickeltechnik wird das imprägnierte Halbzeug auf einen Dorn gewickelt. Mit diesem Verfahren lassen sich insbesondere geodätische oder konkave Formteile realisieren. Mittels geeigneter temperatursteuerung während des Wickelprozesses lässt sich eine besonders gute Haftung zwischen den einzelnen Fasern realisieren.

Andere Geometrien, insbesondere großflächige Werkstücke, lassen sich mittels des Tapelegens herstellen. Beim Tapelegen werden imprägnierte Halbzeuge als unidirektionale Tapes mit einem Verlegungskopf in der Regel von Vorratsspulen auf ebene oder geformte Fertigungsmittels abgelegt. Zusätzlich sind solche Werkzeuge u.a. mit einer Schneidvorrichtung ausgestattet.

Bei dem Thermoformen von Organoblechen handelt es sich um ein Pressverfahren. Dabei sind verschiedene Varianten bekannt. Beim Stempelumformen mit Metallstempeln werden zwei Werkzeughälften aus Metall als Presse verwendet. In dieser Variante sind beide Werkzeugseiten formgebend. Insbesondere für Kleinserien wird das flexibler einsetzbare Umformen mit Elastomerblock verwendet. Bei dieser Variante weist eine Werkezeugseite einen flexiblen, austauschbaren Elastomerblock auf, während die andere Werkzeugseite formgebend ist. Eine Variante dazu ist ein Silikonstempel. Beim Hydroformen weist die erste Werkzeugseite anstelle des Elastomerblocks eine mit einer Flüssigkeit, z.B. einem Hydrauliköl, gefüllte und mit einer elastischen Membran abgeschlossene Kammer auf. Beim Diaphragmaformen ist die nicht formgebende Werkzeugseite eine hochelastische Membran, die während des eigentlichen Pressvorgangs mittels zugeleitetem Gas oder Flüssigkeit und daraus gebildeten Druck nach dem Verschließen des Werkzeugs formgebend wirkt.

Weitere Beispiele für Formgebungsverfahren sind andere Wickeltechniken und Rollformverfahren, insbesondere das Walzenprofilieren, Biegeumformen oder das Fließpressverfahren. Alle beispielhaft aufgeführten Verfahren sind dem Fachmann bekannt und leicht auf die erfindungsgemäßen Halbzeuge anzuwenden.

Die erste Formgebung kann auch mittels einer Variante des erfindungsgemäßen Verfahrens mittels Quicktemp-Formen oder Direktimprägnierung erfolgen. Bei diesen Verfahren erfolgen Imprägnierung und die erste Formgebung im gleichen Werkzeug. Beide Verfahren ähneln ansonsten den beschriebenen Thermoformen von Organoblechen.

Zusätzlich können im erfindungsgemäßen Verfahren in einem zusätzlichen Verfahrensschritt IX aus dem formgegebenen Composite-Halbzeug mittels weiterem Verpressen, Zuschneiden, Fräsen, Polieren und/oder Lackieren bzw. Beschichten Formkörper hergestellt werden. Es können auch aus mehreren Composite Halbzeugen auch Formteile, z.B. mittels Verkleben oder Vernähen, zusammengesetzt werden.
Dieser Verfahrensschritt IX kann nach Verfahrensschritt V oder nach einem Verfahrensschritt VIII erfolgen. Unabhängig davon, wann Verfahrensschritt IX durchgeführt wird, können danach weitere Zyklen der Verfahrensschritte VI bis VIII folgen.

Die erfindungsgemäß hergestellten Composite Halbzeuge zeichnen sich nicht nur dadurch aus, dass diese mehrfach neu verformt werden können, sondern auch dadurch, dass die Composite Halbzeuge bzw. die daraus hergestellten fertigen Formteile recycelt werden können. Dazu können in einem Verfahrensschritt X. das Composite-Halbzeug aus Verfahrensschritt V. oder VIII. oder ein daraus hergestellter Formkörper aus Verfahrensschritt IX. bei einer Temperatur T₄ recycelt wird, wobei die Temperatur T₄ mindestens so hoch ist wie die Entnetzungstemperatur T₂

### Verwendung

Neben den beschriebenen Kit und dem Verfahren zu dessen Verarbeitung sind auch aus diesem Kit bzw. gemäß diesem Verfahren hergestellte Compositematerialien oder Composite Halbzeuge Teil der vorliegenden Erfindung.

Diese erfindungsgemäßen Composite Halbzeuge bzw. die erfindungsgemäß hergestellten Formkörper können verschiedentlich Verwendung finden. Insbesondere können diese zur Herstellung von Composites im Boots- oder Schiffbau, in der Luft- oder Raumfahrtechnik, im Automobilbau, für Zweiräder - bevorzugt Motorräder oder Fahrräder, in den Bereichen Automotive, Construction, Medizintechnik, Sport, Elektro- oder Elektronik-Industrie, sowie in Energieerzeugungsanlagen, wie für Rotorblätter bei Windkraftanlagen eingesetzt werden.

Darüber hinaus kann das erfindungsgemäße Kit auch für andere Zwecke als die Herstellung von Compositen eingesetzt werden. So kommen Beschichtungen oder Klebstoffanwendungen in Frage. Dazu kann das Kit beispielsweise auf Untergründe iwie z.B. Metalle, Holz oder verschiedenen Kunststoffen appliziert werden.
Weiterhin kann aus der erfindungsgemäßen Emulsion ein Kit in Form eines Feststoffs gewonnen werden. Dieser kann beispielsweise mittels Abquetschen oder Sprühtrocknung erhalten werden. Ein solcher Feststoff kann dann wiederum zu einem Formkörper extrudiert werden, als Baumaterial oder Supportmaterial in einem 3D-Druck, wie z.B. dem FDM-Verfahren, eingesetzt werden oder als Komponente einem reversibel einsetzbaren Klebstoff zugegeben werden.

### Beispiele

### Herstellung eines Emulsionspolymers

In einem für die Emulsionspolymerisation ausgelegten 2L-Rühr-Reaktor werden 183 g VE-Wasser sowie 0,24 g Emulgator Disponil SUS IC 875 vorgelegt. Das VE-Wasser wird dabei auf die Soll-Temperatur von 75 °C aufgeheizt. Die Drehzahl des Reaktorrührwerks beträgt (180 U min⁻¹). Ab einer Innentemperatur von 60 °C wird der Reaktor 10 Minuten mit Inertgas gespült. Ein ständiges Überlagern von Inertgas wird danach gewährleistet.

Anschließend werden in einer mit Inertgas gespülten Woulff' schen Flasche nacheinander die Komponenten für die Emulsion vorgelegt:
0,96 g Disponil SUS IC 875
0,72 g 2-Ethylhexylthioglycolat (TGEH)
108,00 g Methylmethacrylat
53,30 g n-Butylmethacrylat
8,0 g Furfurylmethacrylat
85,0 g VE-Wasser
0,4 ml 10 Gew%ige tert-Butylhydroperoxid-Lösung

Nach erfolgter Einwaage wird 5 Minuten gerührt, eine Ruhephase von 5 Minuten eingehalten und abschließend erneut für 30 Minuten wieder gerührt. Die Rührung wird erst 20 Minuten nach Beginn der Emulsionsdosierung wieder ausgeschaltet.

Bei Erreichen einer Innentemperatur von 75 °C im Reaktor werden nacheinander 0,7 ml einer 10 Gew%ige tert-Butylhydroperoxid-Lösung und 2,3 mL einer 5 Gew%igen Natriumformaldehydsulfoxylat-Lösung zugegeben.
Unmittelbar nach der Initiierung werden über 15 Minuten 1,1 g Emulsion/min. aus der Emulsionsvorlage in den Reaktor dosiert. Die Innentemperatur des Reaktors steigt dabei an und erreicht in weniger als 5 Minuten eine um 3 °C höhere Innentemperatur.
Er wird nun langsam auf eine Verfahrenstemperatur zwischen 75 und 77°C abgekühlt.
Nach 15 Minuten der Vordosierung startet direkt im Anschluss die Hauptdosierung mit einer Dosierrate von 2,4 g Emulsion / Minute bei der Verfahrenstemperatur zwischen 75 und 77°C. Die Rührerdrehzahl wird während der Polymerisationszeit bis auf 200 U min-1 heraufgesetzt.

Nach einer Gesamt-Polymerisationszeit von 120 Minuten beginnt eine 60 minütige Nachreaktionszeit bei der Verfahrenstemperatur. Nach beendeter Nachreaktion wird der Reaktorinhalt bei einer Rührerdrehzahl von 200 U min-1 auf Raumtemperatur abgekühlt und über eine 250 µm Nylongaze zwecks Abtrennung fester Bestandteile filtriert.
Die Ausbeute liegt bei 98 %. Die bei der Filtration abgetrennte Koagulatmenge beträgt weniger als 1 g bezogen auf 450 g Ansatz.

### Umsetzung der Emulsion mit Compimide MXBI:

### Einsatzstoffe:

Emulsionspolymer
Entschäumer Dehydran 150
Compimide MXBI (Meta-Xylilenebismaleiimide)

### Durchführung:

Die Emulsion gemäß oben stehender Beschreibung wird in einem großen Gefäß vorgelegt und anschließend mit ca. 0,1% Entschäumer Dehydran 150 versetzt, bevor das Compimide MXBI langsam (bei ca. 500 Umdrehung min⁻¹) hinzufügt wird und für weitere 4 Stunden bei 1000 Umdrehung min⁻¹ weiterrührt wird.

Die benötigte MXBI-Menge entspricht 90% des stöchiometrischen Äquivalents bezogen auf die Wiederholungseinheiten des Furfurylmethacrylats im Polymer.

Versuche mit dem umgesetzten Emulsionspolymer in einer Presse:

Material ca.12 Stunden bei 50°C unter Vakuum trocknen.
Das getrocknete Pulver wird darauf homogen zerkleinert und das dabei erhaltene Pulver in eine Pressform geben und zu Tabletten oder Stäbchen gepresst.
Das Pressen erfolgt bei 50 bis 55 KN und einer Temperatur zwischen 160 und 180 °C über einen Zeitraum von 10 Min.

### Herstellung eines Prepregs

Der Verfahrensschritt IV, die direkte Imprägnierung des faserförmigen Trägers aus Glas, Kohlenstoff oder Kunststoff aus Verfahrensschritt I. mit der Dispersion aus Verfahrensschritt III., erfolgt auf handelsüblichen Coatersystemen, in diesem Fall einem Vertikalcoater. Der faserförmige Träger wird dem Prozess durch einspannen in das Coatersystem zugeführt. Die Dispersion aus Verfahrensschritt III. mit einer Viskoität von 700 mPas wird durch ein Pumpensystem mit vorgeschaltetem Rührwerk dem Coaterprozess zugeführt. Im Gegensatz zu den üblichen Imprägnierverfahren mit thermoplastischen Matrices, welche mit festem Pulver oder bei erhöhten Temperaturen in der Schmelze imprägniert werden, besteht hier die Möglichkeit einer Flüssigimprägnierung mit den vorher genauer beschriebenen Vorteilen einer sehr guten und homogenen Faserimprägnierung.

Das Fasermaterial wird in diesem kontinuierlichen Prozess mit einer Bahngeschwindigkeit v1 von 0,7 m/min durch die Anlage gefahren. Die Imprägnierung erfolgt durch ein Auftragssystem mittels Kiss Coater Technik oder alternativ durch Tauchsysteme in einem Foullard.

Aufgrund der vertikalen Bahnrichtung wird der Matrixverlust minimiert, die Homogenität der Imprägnierung und somit die Qualität des Prepregs zusätzlich verbessert. Der Matrixanteil kann über die Viskosität der Dispersion und nachgeschaltete Rakel in einem Bereich von 15 Gew% bis 60 Gew% gesteuert werden. Bei der in diesem Beispiel verwendeten Dispersion mit einer Viskosität von 700 mPas und zwei nachgeschalteten Rakeln, welche zusätzlich die Imprägnierqualität durch weiteres Durchdrücken der Matrix erhöhen, liegt der Matrixanteil bei 40 Gew%. Das mit Dispersion durchtränkte Fasermaterial wird bei einer Temperatur von 130 °C, somit in diesem Fall größer T₁ aber kleiner T₂, für 5 Minuten im Umluftofen, oder alternativ mit IR-Strahlern getrocknet. Die mittels Massenverlust und DSC bestimmte Restflüchte liegt bei kleiner 1 Gew%.

Da die Trocknung bei einer Temperatur größer T₁ durchgeführt wird, liegt das getrocknete Polymer als vernetzter Film vor. Im Gegensatz zu z.B. mittels Pulverimprägnierung hergestellten Prepregs hat sich ein polymerer Film gebildet. Das Endlosprepreg, welches in diesem Prozess erzeugt wird, bleibt entsprechend flexibel und ermöglicht eine vereinfachte Wicklung mittels geeigneter Wickeleinrichtungen ohne Matrixabrechen. Ein direktes schneiden innerhalb des Imprägnierprozesses ist daher nicht erforderlich, da die Wicklung, auch bei sehr engen Radien zu keiner Qualitätsminderung bzw. Matrixverlust führt.

### Herstellung eines Laminats

Die vernetzten und trockenen Composite Halbzeuge (Prepreg) können durch die Verfahrensschritte VI. VII und VIII zu einem Bauteil geformt werden. In diesem Beispiel wurde ein 8-lagiger Prepreg-Aufbau mit einem Matrixanteil von 40 Gew% mittels IR-Strahler innerhalb von 60 Sekunden auf eine Temperatur von 200°C erhitzt und unverzüglich in ein kaltes Werkzeug gegeben. Der erhitzte mehrlagige Prepreg-Aufbau wird für weitere 60 Sekunden bei einem Flächendruck von 40 bar innerhalb des Werkzeuges auf Raumtemperatur abgekühlt und in Form gebracht. Ab einer Temperatur kleiner T₁ liegt das entstandene Bauteil vernetzt mit den zuvor beschriebenen Eigenschaften und einer Bauteildicke von 2 mm vor. Die Gesamtzykluszeit inklusive Aufheizen, Formgebung und Abkühlung beträgt 2 Minuten.

Im Gegensatz zu anderen vernetzenden Prepreg-Systemen wie Epoxiden erfolgt die Vernetzung während der Abkühlung und nicht bei erhöhten Temperaturen. Dies ermöglicht eine Verkürzung der Zykluszeit von über 10 Minuten auf 2 Minuten. Das geformte Bauteil wurde in drei identischen Zyklen umgeformt und ausgehärtet, um die Reversibilität der Vernetzung zu beweisen. Das entstandene Bauteil liegt bei einer Temperatur kleiner T₁ wie die Prepregs vernetzt und trocken vor. Bei Temperaturen größer T₂ liegt das Bauteil nicht vernetzte als thermoplastische Schmelze mit einer Viskosität von 150 Pas vor und kann erneut geformt und unter Kühlung ausgehärtet werden.

## Patentansprüche

1. Kit zur Herstellung von Composite-Halbzeugen umfassend
A) einen faserförmigen Träger,
B) eine wässrige Polymerdispersion, enthaltend
B1) eine ersten Reaktivkomponente, aufweisend mindestens zwei dienophile Doppelbindungen, und
B2) eine zweite Reaktivkomponente, aufweisend mindestens zwei Dien-Funktionalitäten,
wobei die erste und die zweite Reaktivkomponente miteinander mittels einer Diels-Alder- oder einer Hetero-Diels-Alder-Reaktion vernetzbar sind und es sich bei mindestens einer der beiden Komponenten B1) oder B2) um ein Emulsionspolymerisat handelt.

2. Kit gemäß Anspruch 1, **dadurch gekennzeichnet, dass** die faserförmigen Träger A) größtenteils aus Glas, Kohlenstoff, Kunststoffen, wie Polyamid (Aramid) oder Polyester, Naturfasern, oder mineralischen Fasermaterialien wie Basaltfasern oder keramische Fasern bestehen, und die Fasern dabei als textile Flächengebilde aus Vlies, Maschenware, Gewirke, Gestricke, nicht maschige Gebinde wie Gewebe, Gelege, Geflechte, als unidirektionale Fasern oder als unidirektionale Fasern, als Langfaser- oder Kurzfasermaterialien vorliegen.

3. Kit gemäß Anspruch 1 oder 2, **dadurch gekennzeichnet, dass** es sich bei den dienophilen Doppelbindungen um Kohlenstoff-Schwefel-Doppelbindungen handelt.

4. Kit gemäß mindestens einem der Ansprüche 1 bis 3, **dadurch gekennzeichnet, dass** es sich bei den dienophilen Doppelbindungen um Gruppen mit der Struktur 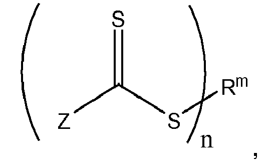 wobei es sich bei Z um eine 2-Pyridylgruppe, eine Cyanogruppe, eine Phosphorylgruppe oder eine Sulfonylgruppe, bei R^{m} um eine mehrbindige organische Gruppe oder um ein Polymer und bei n um eine Zahl zwischen 2 und 20 handelt.

5. Kit gemäß Anspruch gemäß mindestens einem der Ansprüche 1 bis 4, **dadurch gekennzeichnet, dass** es sich bei der Komponenten B2) um ein mittels Emulsionspolymerisation, hergestelltes Polymer handelt, und dass diese Polymerisation unter Copolymerisation von Monomeren, die mindestens eine polymerisationsaktive Gruppe und mindestens eine Dien-Funktionalität aufweisen, erfolgt.

6. Kit gemäß Anspruch gemäß mindestens einem der Ansprüche 1 bis 5, **dadurch gekennzeichnet, dass** es sich bei dem Emulsionspolymerisat um ein Poly(meth)acrylat handelt.

7. Kit gemäß Anspruch gemäß mindestens einem der Ansprüche 1 bis 6, **dadurch gekennzeichnet, dass** es sich bei dem Emulsionspolymerisat um Komponente B2) handelt.

8. Compositematerial oder -halbzeug, **dadurch gekennzeichnet, dass** diese mit einem Kit gemäß mindestens einem der Ansprüche 1 bis 7 hergestellt wurde.

9. Verfahren zur Herstellung von Composite-Halbzeugen und deren Weiterverarbeitung zu Formteilen, **gekennzeichnet durch** folgende Verfahrensschritte
I. optionale Formgebung eines faserförmigen Materials,
II. Herstellung einer wässrigen Poly(meth)acrylatdispersion mittels Emulsionspolymerisation, wobei die Monomerzusammensetzung Monomere enthält, die eine mit (Meth)acrylaten copolymerisierbare Gruppe und eine Dien-Funktionalität aufweisen,
III. Mischen der Dispersion aus Verfahrensschritt II. mit einer Verbindung, die mindestens zwei dienophile Doppelbindungen aufweist,
IV. direkte Imprägnierung des faserförmigen Trägers aus I. mit der Zusammensetzung aus III. und Formgebung,
V. Aushärten der Zusammensetzung bei einer Vernetzungstemperatur T₁.

10. Verfahren gemäß Anspruch 9, **dadurch gekennzeichnet**, das das Composite-Halbzeug aus Verfahrensschritt V. folgenden Verfahrensschritten unterzogen wird:
VI. Erhitzen auf eine Entnetzungstemperatur T₂,
VII. erneute Formgebung und
VIII. erneutes Aushärten der Zusammensetzung bei der Vernetzungstemperatur T₁.

11. Verfahren gemäß Anspruch 9 oder 10, **dadurch gekennzeichnet, dass** die Vernetzungstemperatur T₁ der Vernetzung in den Verfahrensschritten V. bzw. VIII. zwischen 0 und 60 °C, bevorzugt zwischen 10 und 40 °C liegt.

12. Verfahren gemäß mindestens einem der Ansprüche 9 bis 11, **dadurch gekennzeichnet, dass** die Vernetzung in den Verfahrensschritten V. bzw. VIII. bei Raumtemperatur erfolgt, dass in Verfahrensschritt VI. bei der Entnetzungstemperatur T₂ diese Vernetzungsstellen zu mindestens 50% mittels einer Retro-Hetero-Diels-Alder-Reaktion wieder gelöst werden, und dass die Entnetzungstemperatur T₂ zwischen 50 und 150 °C oberhalb der Vernetzungstemperatur T₁ liegt.

13. Verfahren gemäß mindestens einem der Ansprüche 9 bis 12, **dadurch gekennzeichnet, dass** Verfahrensschritte III. und IV. bei einer Temperatur T₃ durchgeführt werden, die mindestens 40 °C oberhalb der Vernetzungstemperatur T₁ liegt, und dass Verfahrensschritt V. durch Abkühlen auf die Vernetzungstemperatur T₁ erfolgt.

14. Verfahren gemäß Anspruch 10, **dadurch gekennzeichnet, dass** die Verfahrensschritte VI. bis VIII. einmal oder mehrfach wiederholt werden.

15. Verfahren gemäß mindestens einem der Ansprüche 9 bis 14, **dadurch gekennzeichnet, dass** nach Verfahrensschritt IV. in einem Verfahrensschritt Iva. die Formulierung bei einer Temperatur T₂ getrocknet wird und Anschließend in Verfahrensschritt V. durch Abkühlen auf die Temperatur T₁ ausgehärtet wird.

16. Verfahren gemäß mindestens einem der Ansprüche 9 bis 15, **dadurch gekennzeichnet, dass** in einem Verfahrensschritt IX. aus dem Composite-Halbzeug aus Verfahrensschritt V. oder VIII. mittels Zuschneiden, Fräsen, Polieren und/oder Lackieren bzw. Beschichten ein Formkörper hergestellt wird.

17. Verfahren gemäß mindestens einem der Ansprüche 9 bis 16, **dadurch gekennzeichnet, dass** in einem Verfahrensschritt X. das Composite-Halbzeug aus Verfahrensschritt V. oder VIII. oder ein daraus hergestellter Formkörper aus Verfahrensschritt IX. bei einer Temperatur T₄ recycelt wird, wobei die Temperatur T₄ mindestens so hoch ist wie die Entnetzungstemperatur T₂.

18. Verwendung der Composite-Halbzeuge die gemäß mindestens einem der Ansprüche 9 bis 16 hergestellt wurden oder eines daraus gemäß Anspruch 17 hergestellten Formkörpers im Boots- oder Schiffbau, in der Luft- oder Raumfahrtechnik, im Automobilbau, für Zweiräder, bevorzugt für Motorräder oder Fahrräder, in den Bereichen Construction, Medizintechnik, Sport, Elektro- und Elektronik-Industrie oder in Energieerzeugungsanlagen, insbesondere für Rotorblätter bei Windkraftanlagen.
